Europäisches Patentamt

European Patent Office

Office européen des brevets

(11) Publication number: **0 172 665**
**B1**

# EUROPEAN PATENT SPECIFICATION

(45) Date of publication of patent specification: **07.09.88**

(51) Int. Cl.⁴: **F 16 B 43/00**

(21) Application number: **85305234.8**

(22) Date of filing: **23.07.85**

(54) Fastener cooperable with threaded shank.

(30) Priority: **30.07.84 US 635978**

(43) Date of publication of application:
**26.02.86 Bulletin 86/09**

(45) Publication of the grant of the patent:
**07.09.88 Bulletin 88/36**

(84) Designated Contracting States:
**DE FR GB IT**

(56) References cited:
**DE-A-1 934 799**
**FR-A-2 359 313**
**GB-A- 867 013**
**US-A-2 851 079**
**US-A-3 425 473**

(73) Proprietor: **TRW INC.**
**1900 Richmond Road**
**Cleveland Ohio 44124 (US)**

(72) Inventor: **Danico, Henry F.**
**No. 4 Carmen Avenue**
**Stoneham Massachusetts (US)**
Inventor: **Hammerle, Frederick A.**
**212 Washington Street**
**Topsfield Massachusetts (US)**

(74) Representative: **Jenkins, Richard Gray et al**
**R.G.C. Jenkins & Co. 26 Caxton Street**
**London SW1H 0RJ (GB)**

Courier Press, Leamington Spa, England.

## Description

This invention generally pertains to fasteners which are cooperable with threaded shanks.

The invention is particularly applicable to such fasteners which are utilized in fastening automobile body panels together. For this type of application, it is required that the fastener be able to bear up under high torque values while retaining a sealing function and not adversely affecting the quality of the joint. However, it will be appreciated by those skilled in the art that the invention has broader application and may also be adapted to use in many other fastening environments where it is necessary to fasten any two members to each other.

Several fasteners formed as free spinning nut and washer assemblies cooperable with threaded shanks are known to the art. One conventional assembly disclosed in US—A—2851079 includes a sheet metal nut in the form of a cup having a transverse wall provided with an opening. The edge portions of the opening are formed into thread form to cooperate with a threaded fastener. This nut is combined with a washer having a tubular portion received within the cup, and the combined nut and washer is provided with a yieldable sealing material normally extending therebeyond for direct engagement with an article on which the nut is to be used. The sealing element is comprised of plastic material or rubber, and completely fills the cavity within the tubular portion of the washer and the nut except for an axially extending opening aligned with the threaded fastener receiving opening of the nut. Such a conventional nut and washer assembly is expensive to produce and necessitates use of a sealing element which is separate from the washer. Moreover, under a torque load on the nut, the sealing element is forced upwardly around the fastener, thus acting as a lubricant and reducing torque values.

Another fastener formed as a nut and washer assembly is disclosed in US—A—3425473. This fastener comprises a skirt portion, an end portion, a frangible connection between said skirt and end portions adapted to fracture when a predetermined torque is applied between the skirt and end portions for allowing said skirt and end portions to be rotated relative to each other, a central aperture extending therethrough for receiving a threaded shank, at least the portion of the aperture extending through the skirt portion being unthreaded, and thread means associated with said end portion for threadingly engaging a threaded shank extending through said aperture in use. More specifically, the above-mentioned skirt portion is formed by a dome-shaped sheet metal washer and the end portion comprises a metal nut which is joined to the washer by a frangible connection formed by a bonding element. After the nut and washer assembly is threaded onto a threaded shank, the nut is broken away from the washer for allowing the nut to compensate for other than a perpendicular relationship ·between the surface on which the washer rests and the threaded shank.

An object of the present invention is to provide a fastener which is cooperable with a threaded shank and which comprises a skirt portion which is connected to an end portion by a frangible connection as aforesaid which can be manufactured inexpensively.

This is achieved by the skirt portion and end portion being formed in a one-piece member, said frangible connection being a collar section of said member between said skirt and end portions and having a conformation to fracture when said predetermined torque is applied between said skirt and end portions.

The thread means associated with the end portion may comprise a thread formation provided in the portion of said aperture in the end portion of said member.

Alternatively, these thread means may be provided on a separate element secured to said end portion. In this case preferably said end portion has a predetermined peripheral conformation, and said separate element comprises a nut having a generally cup-like body defining a cavity which closely receives said end portion, said nut further including a thread engaging portion adapted to threadedly engage a threaded shank. The nut may be constructed from metal and the member from a plastics material.

The skirt portion may have a generally frusto-conical shape.

The aperture preferably increases in cross-sectional dimension axially threalong from adjacent said collar section to the free end of the skirt portion, thereby providing the skirt portion with a greater capacity for undergoing compression in an installed condition.

Preferably the skirt portion is provided with a sealing face disposed at the free end thereof. This sealing face may be defined by a narrow band extending around said free end. Alternatively, the sealing face may be defined by a plurality of concentric sealing ridges extending around said free end. These sealing ridges preferably terminate in outermost apex areas which may be generally rounded or pointed in cross-section.

It will be appreciated that by providing the skirt portion with a sealing face a separate sealing element is not required. Further, by forming the member of a plastics material, the skirt portion will not skive or abrade the surface on which it rests during rotation prior to fracture of the collar section of the member.

In order that the invention may be well understood, some embodiments thereof will now be described with reference to the accompanying drawings, in which:

Figure 1 is an exploded perspective view of a fastener assembly comprising a fastener embodying the present invention and a fastener having a threaded shank.

Figure 2 is a cross-section of the same fastener assembly as used for securing two plates to each other;

Figure 3 is an enlarged cross-sectional view of a member of the fastener embodying the invention and showing two alternative sealing face arrangements;

Figure 4 is a greatly enlarged cross-sectional view of a portion of the member of Figure 3; and

Figure 5 is a view similar to Figure 4 showing an alternative sealing face.

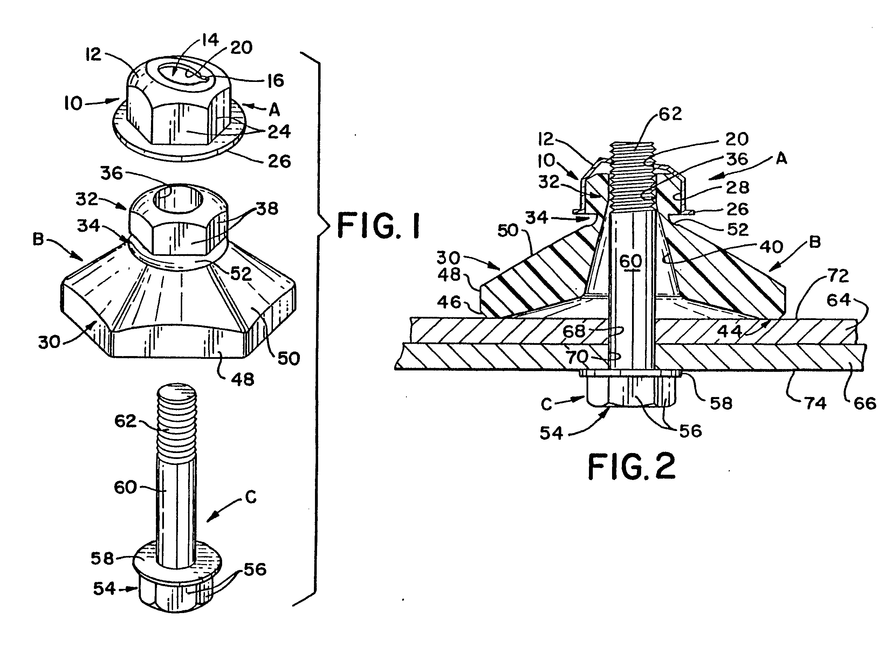

Referring now to the drawings, Figure 1 shows a fastener which is an assembly of a nut A and a washer member B. A threaded fastener C which is retainingly received by nut A is also shown. While the fastener assembly is primarily designed for and will hereinafter be described in connection with the fastening together of automotive body panels, it will be appreciated that the overall inventive concept involved could be adapted to use in numerous other environments.

Nut A includes a nut body 10 which has a generally cup or top hat-type shape. In the preferred arrangement here under discussion, the nut body comprises a sheet metal stamping. However, other materials and/or methods of manufacture could also be employed satisfactorily. A somewhat conical top portion 12 includes a central fastener receiving opening 14 havung a radial slot 16 communicating therewith. This slot acts to define a generally arcuate edge portion 20, and this edge portion is formed into a helical configuration. Edge portion 20 is helicoidally shaped to permit entry of one end of the edge portion into the threaded portion of fastener C (Figure 2). The edge portion may advantageously be beveled so as to facilitate ease of engagement with the threads of a conventional threaded fastener.

It will be evident to those skilled in the art that the arcuate edge portion 20 of the nut can be formed in other manners without in any way departing from the overall intent or scope of the invention. Moreover, nut A may itself take other forms or styles while facilitating successful practice of the inventive concept involved.

Nut body 10 also has a plurality of sidewalls 24 which are formed into a noncircular cross-section to accept engagement by a conventional wrench or other turning tool (not shown). In the illustrated embodiment of the invention, the sides of the nut body 10 define a hexagon. It will be appreciated, however, that other conventional types of polygonal conformations such as squares and the like also may suitably be employed. The nut body is further provided with a flange or skirt 26 which extends radially outward from and peripherally around the bottom of the sidewalls 24. As mentioned nut body 10 is cup-shaped and includes a generally hexagonal interior cavity 28 corresponding to the exterior conformation. However, other cavity conformations may also be utilized.

The washer member B comprises a skirt portion 30, a smaller or reduced diameter end portion 32, and a narrow collar section 34 which connects portions 30, 32. Preferably, the washer member is molded or otherwise formed of a plastic material. Any plastic having good sealing and appropriate strength characteristics would be acceptable, and in some cases, other materials could also be used. A central aperture 36 extends axially through end portion 32, and the end portion has a conformation which closely corresponds with cavity 28 of nut body 10. In this way, the nut can be received on and secured to washer end portion 32 by means of a press fit relationship or the like. By way of one alternative construction, it would be possible to incorporate threads in central aperture 36 so that end portion 32 would function as a nut. In that case nut body 10 could be eliminated.

With particular referenece now to Figure 2, a first axially extending aperture 40 extends through the skirt portion 30 and collar section 34 in communication with aperture 36. Preferably, aperture 40 increases in diameter in a direction away from the reduced diameter portion 32, and communicates with a second tapered aperture 42 adjacent the lower end of the skirt portion. The tapered nature of apertures 40, 42 permits the skirt portion to experience flexure in response to relative advancement between fastener C and nut A as will be described. As a result, the skirt portion will exert a continuous biasing force against the nut as well as seal against an associated workpiece. A sealing surface 44 is provided on a lower periphery of the skirt portion to effect sealing against an associated workpiece surface. As shown in the drawings, sealing surface 44 is disposed in a plane which is generally normal to the longitudinal axis of member B. However, it is not necessary that this relationship be maintained, and other angular relationships may be experienced and accommodated at installation. The skirt portion also includes first and second peripheral sidewalls 46, 48, as well as a top wall 50. An inwardly curved surface portion 52 is provided intermediate skirt top wall 50 and collar section 34.

A conventional threaded fastener C, e.g., a bolt or stud, can extend through the aligned apertures in washer B and nut A. Fastener C includes a head 54 provided with a polygonal conformation defined by a plurality of planar sidewalls 56 engageable by a conventional driving tool (not shown). The fastener also has an enlarged flange 58 adjacent head 54 and an elongated shank 60 extending outwardly therefrom. Shank 60 is threaded over a portion thereof as at 62 to receive a nut. It will be appreciated that other types of fastener arrangements may also be suitably employed including, for example, constructions where the shank portion is fixedly secured to or integral with a workpiece.

Continuing with reference to Figure 2, fastener C is shown as being used in combination with the subject new washer and nut assembly for securing two workpieces 64, 66 to each other. When the fastener passes through aligned apertures 68, 70 in the two workpieces and is threaded into the aperture 14 of nut A, the member B is drawn toward contact with the outer surface 72 of workpiece 64. At the same time, flange 58 of the fastener C comes toward contact with the outer surface 74 of workpiece 66. In this manner, the two workpieces may be drawn toward each other to assume a close fitting relationship. At the same time skirt portion 30 may be flexed somewhat under the influence of nut A to enhance sealing between sealing surface 44 and workpiece surface 72. Since the skirt portion is constructed from plastic, such flexure will also cause a continuous force to be placed against the nut tending to prevent unloosening of the fastener.

A wrench or other appropriate tool may then be used on fastener head 54 to advance threaded portion 62 further into nut A. Frictional contact between workpiece surface 72 and the lower periphery of skirt portion 30 functions to prevent rotation of the member B and nut A, thus permitting advancement of the fastener into the nut as the fastener is rotated.

As previously noted, collar section 34 of the member B, is weakened, i.e., is frangible, so that it will fracture when a predetermined torque load is applied to nut A. As a result, when a predetermined torque level is reached during fastener tightening, nut A, along with end portion 32 received in cavity 28, will separate from the end portion 32 at collar section 34. Upon separation, the nut will turn or rotate with respect to washer skirt portion 30 as the nut or fastener is rotated further.

The point where collar section 34 allows separation between the nut A with washer reduced diameter portion 32 and skirt portion 30 may advantageously be set to occur within some predetermined torque range so that the skirt portion is disposed in a desired cooperative relationship with workpiece surface 72. At the time of separation at the collar section, sealing surface 44 of the skirt portion is disposed in sealing contact with workpiece surface 72. Because of the pliable nature of collar section 34, skirt portion 30, hence sealing surface 44, may be flexed somewhat relative to the longitudinal axis of the washer to sealingly accommodate angled surfaces. Washer end portion 32 remains inside nut cavity 28 to create a torquing member and to also serve as an effective seal around threaded portion 62 of fastener C. This relationship prevents moisture from getting into aperture 40 and penetrating through aligned apertures 68, 70 in workpieces 64, 66.

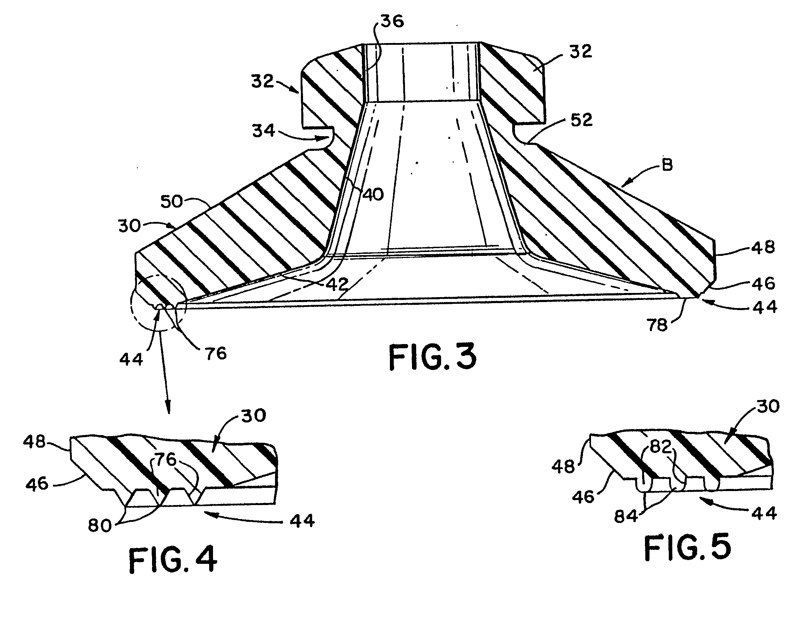

With reference now to Figures 3, it will be seen that sealing surface 44 may advantageously be constructed to take a number of different forms. For example, a plurality of outwardly extending sealing ridges 76 as shown in the left hand side of Figure 3 can be provided to define the sealing surface with three such ridges being illustrated. Alternatively, the sealing surface can take the form of a band 78 as shown on the right hand side of Figure 3. Of course, the sealing surface normally would not be provided with both types of sealing arrangements at the same time.

With reference now to Figure 4, if sealing ridges 76 are provided, they could have pointed apexes 80. Because the washer is preferably made of a plastic material, there will be no tendency for sealing surface 44 to lacerate the surface finish on workpiece surface 72. This is useful in the event workpiece 64 comprises a vehicle body panel or the like since it prevents the possibility of scratches and resultant corrosion of the metal from which the body panel member is made.

Figure 5 shows another alternative embodiment for the sealing surface. In the figure, a plurality of sealing ridges 82 on the skirt portion are each provided with rounded apexes 84. It will be evident to those skilled in the art that still other alternative configurations may satisfactorily be employed for the sealing surface.

The illustrated fastener comprising nut A and member B which is useful in various applications, especially automotive assembly applications requiring nut and washer assemblies which are able to sustain predetermined torque and load values while also having a moisture proof sealing element. In a test of several samples of the illustrated fastener, torque values as high as 113 Nm (100 inch pounds) have been obtained before fracture or separation occurred between the nut and the washer skirt. Of course, the torque value which causes separation may be varied by modifying the characteristics of the collar section which interconnects the washer end and skirt portions. In contrast with the washer and nut assemblies of the prior art, the illustrated fastener is considerably less expensive due to the elimination of a mastic sealing material as a separate component. The provision of a plastic washer for automotive use is also considered to be more advantageous since it is non-corroding and there is no tendency for the washer to lacerate the surface finish of an associated workpiece or panel.

**Claims**

1. A fastener for cooperation with a threaded shank, comprising a skirt portion (30), an end portion (32), a frangible connection (34) between said skirt and end portions adapted to fracture when a predetermined torque is applied between the skirt and end portions for allowing said skirt and end portions to be rotated relative to each other, a central aperture (36, 40, 42) extending therethrough for receiving a threaded shank (60), at least the portion of the aperture extending through the skirt portion being unthreaded, and thread means (20) associated with said end portion (32) for threadingly engaging a threaded shank extending through said aperture in use, characterised in that said skirt portion and end portion are formed in a one-piece member (B), said frangible connection being a collar section (34) of said member between said skirt and end portions and having a conformation to fracture when said predetermined torque is applied between said skirt and end portions.

2. A fastener as claimed in Claim 1, wherein said thread means comprises a thread formation provided in the portion of said aperture in the end portion (32) of said member (B).

3. A fastener as claimed in Claim 1, wherein said thread means is provided on a separate element (A) secured to said end portion (32).

4. A fastener as claimed in Claim 3, wherein said end portion (32) has a predetermined peripheral conformation, and said separate element (A) comprises a nut having a generally cup-like body (10) defining a cavity which closely receives said end portion (32), said nut further including a thread engaging portion (20) adapted to threadedly engage a threaded shank.

5. A fastener as claimed in Claim 4, wherein said nut (A) is constructed from metal and said member (B) is constructed from a plastic material.

6. A fastener as claimed in any one of Claims 1 to 5, wherein said slant portion (30) has a generally frusto-conical shape.

7. A fastener as claimed in Claim 6, wherein said aperture increases in cross-sectional dimension axially therealong from adjacent said collar section to the free end of the skirt portion.

8. A fastener as claimed in any one of Claims 1 to 7, wherein said skirt portion is provided with a sealing face (44) disposed at the free end thereof.

9. A fastener as claimed in Claim 8, wherein said sealing face is defined by a narrow band (78) extending around said free end.

10. A fastener as claimed in Claim 8, wherein said sealing face is defined by a plurality of concentric sealing ridges (76, 82) extending around said free end.

11. A fastener as claimed in Claim 10, wherein said sealing ridges terminate in outermost apex areas (80, 84).

12. A fastener of Claim 11, wherein said apex areas (84) are generally rounded in cross-section.

**Patentansprüche**

1. Mit einem Gewindeschaft zusammenwirkendes Befestigungselement, umfassend einen Randteil (30), einen Endteil (32), eine Bruchverbindung (34) zwischen dem Rand- und Endteil zum Bruch bei einem bestimmten Drehmoment zwischen dem Rand- und Endteil, um es diesen zu gesatten, relativ zueinannder gedreht zu werden, sowie eine mittlere Öffnung (36, 40, 42), die sich durch das Rand- und Endteil erstreckt, um einen Gewindeschaft (60) aufzunehmen, wobei mindestens ein Teil der Öffnung, der sich durch den Randteil erstreckt, gewindelos ausgebildet ist und dem Endteil (32) Gewindemittel zugeordnet sind, um mit dem Gewindeschaft, welcher sich durch die Öffnung erstreckt, zusammenzuwirken, dadurch gekennzeichnet, daß der Randteil und der Endteil aus einem einstückigen Element (B) gebildet ist, daß die Bruchverbindung ein Bundabschnitt (34) des Elements zwischen dem Rand- und Endteil ist und eine Ausbildung hat, um zu zerbrechen, wenn ein vorbestimmtes Drehmoment zwischen dem Rand- und Endteil aufgebracht wird.

2. Befestigungselement nach Anspruch 1, dadurch gekennzeichnet, daß die Gewindemittel eine Gewindebildung umfassen, die in dem Teil der Öffnung in dem Endteil (32) des Elements (B) vorgesehen ist.

3. Befestigungselement nach Anspruch 1, dadurch gekennzeichnet, daß die Gewindemittel auf einem getrennten Element (A) vorgesehen sind, das an dem Endteil (32) befestigt ist.

4. Befestigungselement nach Anspruch 3, dadurch gekennzeichnet, daß der Endteil (32) eine vorbestimmte periphere Ausbildung hat und das getrennte Element (A) eine Nut umfaßt, die einen im allgemeinen napfförmigen Körper (10) umfaßt, der einen Hohlraum begrenzt, welcher den Endteil (32) eng aufnimmt, wobei die Nut weiterhin einen Gewindeeingriffsteil (20) umfaßt, die so ausgebildet ist, um mit einen Gewindeschaft in Gewindeeingriff zu stehen.

5. Befestigungselement nach Anspruch 4, dadurch gekennzeichnet, daß die Nut (A) aus Metall und das Element (B) aus Kunststoff gebildet ist.

6. Befestigungselement nach einem der Ansprüche 1 bis 5, dadurch gekennzeichnet, daß geneigte Teil (30) eine im allgemeinen kegelstumpfförmige Form hat.

7. Befestigungselement nach Anspruch 6, dadurch gekennzeichnet, daß die Öffnung axial in der Querschnittbemessung von dem benachbarten Bundabschnitt zum freien Ende des Randteils zunimmt.

8. Befestigungselement nach einem der Ansprüche 1 bis 7, dadurch gekennzeichnet, daß der Randteil mit einer Abdichtfläche (44) versehen ist, die an dessen freiem Ende angeordnet ist.

9. Befestigungselement nach Anspruch 8, dadurch gekennzeichnet, daß die Abdichtfläche durch ein schmalen Ring (78) abgegrenzt ist, der sich um das freie Ende herum erstreckt.

10. Befestigungselement nach Anspruch 8, dadurch gekennzeichnet, daß die Abdichtfläche von einer Mehrzahl von konzentrischen Abdichtrippen (76, 82) abgegrenzt ist, die sich um das freie Ende herum erstrecken.

11. Befestigungselement nach Anspruch 10, dadurch gekennzeichnet, daß die Abdichtrippen in äußersten Scheitelpunktbereichen (80, 84) enden.

12. Befestigungselement nach Anspruch 11, dadurch gekennzeichnet, daß die Scheitelpunktbereiche (84) im allgemeinen im Querschnitt abgerundet sind.

**Revendications**

1. Elément de fixation destiné à coopérer avec une tige filetée, comprenant une portion de jupe (30), une portion d'extrémité (32), une liaison frangible (34) entre les portions de jupe et d'extrémité apte à se rompre lorsqu'un moment de torsion prédéterminé est appliqué entre les portions de jupe et d'extrémité pour permettre à ces portions de jupe et d'extrémité d'effectuer une rotation l'une par rapport à l'autre, une ouverture centrale (36, 40, 42) s'étendant à travers celles-ci pour recevoir une tige filetée (60), au moins la portion de l'ouverture s'étendant à travers la portion de jupe étant non filetée, et des moyens de vissage (20) associés à la portion d'extrémité (32) pour l'engagement par vissage d'une tige filetée s'étendant à travers l'ouverture en cours d'utilisation, caractérisé en ce que la portion de jupe et la portion d'extrémité sont constituées par un élément d'un seul tenant (B), la liaison frangible étant une section de collier (34) de cet élément entre les portions de jupe et d'extrémité et présentant une configuration lui permettant de se rompre lorsque le moment de torsion prédéterminé est appliqué entre les portions de jupe et d'extrémité.

2. Elément de fixation selon la revendication 1, dans lequel le moyen de vissage comprend une combinaison taraudage/filetage pratiquée dans la portion de l'ouverture dans la portion d'extrémité (32) de cet élément (B).

3. Elément de fixation selon la revendication 1, dans lequel le moyen de vissage est prévu sur un élément séparé (A) assujetti à la portion d'extrémité (32).

4. Elément de fixation selon la revendication 3, dans lequel la portion d'extrémité (32) présente une configuration périphérique prédéterminée et cet élément séparé (A) comprend un écou comportant un corps (10) de façon générale en forme de coupelle définissant un évidement qui reçoit étroitement la portion d'extrémité (32), cet écrou comprenant de plus une portion d'engagement à vissage (20) apte à s'engager sur le filet d'une tige filetée.

5. Elément de fixation selon la revendication 4, caractérisé en ce que l'écrou (A) est en métal et l'élément (B) est en matière plastique.

6. Elément de fixation selon l'une quelconque des revendications 1 à 5, dans lequel la portion inclinée (30) présente une forme générale tronconique.

7. Elément de fixation selon la revendication 6, dans lequel l'ouverture augmente dans la dimension transversale axialement à partir de la section de collier adjacent jusqu'à l'extrémité libre de la portion de jupe.

8. Elément de fixation selon l'une quelconque des revendications 1 à 7, dans lequel la portion de jupe est munie d'une face d'échanchéité (44) disposée sur son extrémité libre.

9. Elément de fixation selon la revendication 8, dans lequel la face d'étanchéité est définie par une bande ètroite (78) s'étendant autour de l'extrémité libre.

10. Elément de fixation selon la revendication 8, dans lequel la face d'étanchéité est définie par plusieurs arêtes d'étanchéité (76, 82) s'étendant autour de l'extrémité libre.

11. Elément de fixation selon la revendication 10, dans lequel les arêtes d'étanchéité aboutissent dans les zones les plus apicales (80, 84).

12. Elément de fixation selon la revendication 11, dans lequel les zones apicales (84) sont de façon générale arrondie dans leur section transversale.

FIG. 1

FIG. 2

0 172 665

FIG.3

FIG.4

FIG.5